(19) Europäisches Patentamt
European Patent Office
Office européen des brevets

(11) Veröffentlichungsnummer: **0 071 093**
**B1**

(12) # EUROPÄISCHE PATENTSCHRIFT

(45) Veröffentlichungstag der Patentschrift: **23.04.86**

(51) Int. Cl.[4]: **C 08 L 71/04**, C 08 G 65/46

(21) Anmeldenummer: **82106328.6**

(22) Anmeldetag: **15.07.82**

(54) **Verfahren zur Herstellung von Polyphenylenether enthaltenden Formmassen.**

(30) Priorität: **07.08.81 DE 3131440**

(43) Veröffentlichungstag der Anmeldung: **09.02.83 Patentblatt 83/6**

(45) Bekanntmachung des Hinweises auf die Patenterteilung: **23.04.86 Patentblatt 86/17**

(84) Benannte Vertragsstaaten: **AT BE CH DE FR GB IT LI NL**

(56) Entgegenhaltungen: **DE - A - 2 359 948**

**Die Akte enthält technische Angaben, die nach dem Eingang der Anmeldung eingereicht wurden und die *nicht in dieser Patentschrift enthalten sind.***

(73) Patentinhaber: **BASF Aktiengesellschaft, Carl-Bosch-Strasse 38, D-6700 Ludwigshafen (DE)**

(72) Erfinder: **Hinselmann, Klaus, Robert-Koch-Strasse 25, D-6704 Mutterstadt (DE)**
Erfinder: **Naarmann, Herbert, Dr., Haardtblick 15, D-6719 Wattenheim (DE)**
Erfinder: **Echte, Adolf, Dr., Leuschnerstrasse 42, D-6700 Ludwigshafen (DE)**
Erfinder: **Heil, Eduard, Hardenburgstrasse 4, D-6703 Limburgerhof (DE)**
Erfinder: **Nikles, Albert, Am Dorfzaun 1, D-6700 Ludwigshafen (DE)**
Erfinder: **Reffert, Rudi Wilhelm, Berliner Strasse 18, D-6711 Beindersheim (DE)**
Erfinder: **Hambrecht, Juergen, Dr., Werderstrasse 30, D-6900 Heidelberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft ein Verfahren zur Herstellung von hochmolekularen Polyphenylenether enthaltenden Formmassen, wobei Eingangslösungen von Polyphenylenether in organischen Lösungsmitteln gemeinsam mit Homo- oder Copolymerisaten des Styrols oder seiner Homologen, die gegebenenfalls mit Kautschuk modifiziert sind, durch Verdampfen des Lösungsmittels von diesen befreit werden.

Bei diesen Formmassen handelt es sich um ungeformte oder vorgeformte Stoffe, welche aufgrund ihres Gehalts an Polyphenylenether sehr gut anwendbar sind bei hohen Spitzen- und Gebrauchstemperaturen.

Es ist bereits bekannt, hochmolekulare Polyphenylenether nach deren Herstellung aus einwertigen Phenolen aus der Reaktionslösung in aromatischen Lösungsmitteln mit Methanol zu fällen und das ausgefüllte Polymere abzufiltrieren (vgl. US-PA 3 661 848). Das getrocknete Polymere wird üblicherweise anschliessend in einem Extruder mit Styrolpolymeren abgemischt.

Nachteilig am bekannten Verfahren ist der Einsatz grosser Lösungs- und Fällungsmittel. Ausserdem kann durch die hohe Mischungstemperatur von 250 bis 350°C im Extruder eine mechanisch und thermisch bedingte Produktschädigung eintreten, insbesondere beim einzumischenden Styrolpolymerisat bzw. der Kautschukkomponente im Styrolpolymerisat. Ein weiterer Nachteil der bekannten Mischverfahren ist der hohe Energieaufwand bei der Compoundierung und Lösungsmittelrückgewinnung.

Aus der DE-A-2 359 948 ist bereits ein Verfahren zur Herstellung von Mischungen aus Polyphenylenoxid und Styrolpolymerisaten bekannt, bei dem Lösungen der Polymeren zu einem Tröpfchennebel versprüht werden und bei dem die zur Verdampfung des Lösungsmittels notwendige Wärme durch eine mehrfache Gewichtsmenge an überhitzten Inertgasen oder Lösungsmitteldämpfen oder deren Gemischen, die dem Tröpfchennebel beigemischt sind, aufgebracht wird. Die Polymermischung fällt bei diesem bekannten Verfahren als trockenes, festes Pulver in rieselfähiger Form an und muss bei Temperaturen unterhalb ihres Erweichungspunktes vom Inertgas-Lösungsmitteldampf-Gemisch z.B. über ein Zyklon abgetrennt werden.

Nachteilig an diesem bekannten Verfahren sind die Anwendung und Handhabung grosser Inertgasvolumina und die Abtrennung der Lösungsmittel aus dem Gas-Dämpfe-Gemisch sowie die vollständige Abtrennung von staubförmigen Festproduktteilchen aus dem Gas-Dämpfe-Gemisch. Weiterhin sind bei der Überführung der Festproduktpulver aus der Inertgas-Lösungsmitteldampfzone an die Atmosphäre wegen der niedrigen Schüttgewichte der Pulver die Lösungsmittelverluste problematisch.

Der vorliegenden Erfindung lag daher die Aufgabe zugrunde, die obgenannten Nachteile zu vermeiden und ein einfaches und billiges Verfahren zur Herstellung von Polyphenylenethermischungen aufzufinden, bei dem der Produktabbau der Polymerisatkomponenten wesentlich vermindert ist.

Diese Aufgabe wurde erfindungsgemäss dadurch gelöst, dass Lösungen von Polyphenylenether in organischen Lösungsmitteln gemeinsam mit anderen Polymeren in einem Mehrstufenprozess durch Verdampfen des Lösungsmittels von diesem befreit werden.

Das organische Lösungsmittel ist bevorzugt eine aromatische Verbindung aus der Klasse der Kohlenwasserstoffe, Halogenkohlenwasserstoffe, Ether oder Ester. Es ist zweckmässig, dass das Mischungsverhältnis der anderen Polymeren zum Polyphenylenether 99:1 bis 20:80 Gewichtsteile, bezogen auf die Mischung, beträgt und dass die anderen Polymeren Homo- oder Copolymerisate des Styrols oder seiner Homologen sind, die gegebenenfalls mit Kautschuk modifiziert sind.

Bevorzugt beinhaltet der Mehrstufenprozess des Verdampfens mindestens zwei und höchstens vier Aufarbeitungsstufen. Besonders bevorzugt ist ein Verfahren, bei dem das Verdampfen des Lösungsmittels bei Temperaturen zwischen 120 und 280°C und bei Drücken von 1 bis 3000 mbar vorgenommen wird. Es ist auch ein Vorteil, das Verdampfen in Gegenwart von Partialdruck senkenden Hilfsmitteln wie Wasser und/oder Methanol vorzunehmen.

Die Polphenylenether sind Eigenkondensationsprodukte von einwertigen monocyclischen Phenolen, die durch Umsetzung der Phenole mit Sauerstoff in Gegenwart von Katalysatorkomplexen hergestellt werden. Sie weisen Molekulargewichte von 23 000 bis 40 000, bevorzugt 25 000 bis 30 000, bestimmt nach der in «Macromolecules Syntheses»[1] (1978), Seite 83, angegebenen Methode, auf. Die erfindungsgemässen Polyphenylenether enthalten wiederkehrende Struktureinheiten der allgemeinen Formel I.

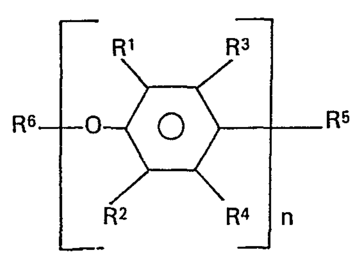

I

Das Sauerstoffatom der einen Einheit ist dabei an den Benzolring der nächsten benachbarten Einheit gebunden, n ist eine positive ganze Zahl von wenigstens 50, vorzugsweise wenigstens 100. $R^1$, $R^2$, $R^3$ und $R^4$ sind Substituenten aus der Gruppe: Wasserstoff, Halogenatom, Kohlenwasserstoffreste, Halogenkohlenwasserstoffreste, Kohlenwasserstoffoxy-Reste, u.a. Die Reste können gleich oder verschieden sein. Der Rest $R^5$ stellt ein Wasserstoffatom dar. Der Rest $R^6$ kann ein Wasserstoffatom, eine Kohlenwasserstoffgruppe oder eine Carboxygruppe darstellen. $R^6$ kann auch polyfunktionell sein, so dass zwei oder mehrere Polyphenylenethermoleküle über diesen Rest $R^6$ miteinander verknüpft sind. Grundlage solcher polyfunktionellen Gruppen sind Polycarbonsäuren oder Carbonsäureanhydride wie Maleinsäureanhydrid, Pyromellithsäureanhydrid, Azelainsäure, Pyromellithsäure, Polyacrylsäure u.a.

Hochmolekulare Polyphenylenether der Struktur I, auch Poly(phenylenoxide) genannt, sind aus der Literatur seit längerem bekannt (vgl. z.B. US-PSen 3 561 848, 3 219 625, 3 378 505), so dass sich eine weitere Beschreibung erübrigt.

Die zur Herstellung der erfindungsgemässen hochmolekularen Polyphenylenether der Formel I verwendeten einwertigen Phenole, die in den beiden ortho-Stellungen und gegebenenfalls der meta-Position, nicht aber in der para-Stellung Alkylsubstituenten aufweisen, sind die üblichen Phenole wie 2,6-Dimethylphenol, 2,6-Diethylphenol, 2-Methyl-6-ethylphenol, 2-Methyl-6-propylphenol, 2,6-Dibutylphenol, 2,3,6-Trimethylphenol sowie Gemische dieser Phenole.

Zur Ausführung der Polykondensation wird üblicherweise Sauerstoff in die 25 bis 50° warme Lösung des Monomeren in Gegenwart eines Katalysatorkomplexes eingeleitet. Die Sauerstoffdurchflussgeschwindigkeit ist im wesentlichen die gleiche, wie sie in den US-Patentschriften 3 306 874 und 3 306 875 beschrieben ist. Nach den bekannten Verfahren wird der Katalysator aus Kupfersalz, vorzugsweise Kupfer-I-Bromid, Amin und 0,01 bis 5 Gew.% 2,6 Dimethylphenol in die Vorlage der gelösten Monomeren eindosiert.

Bei dem für die Polykondensation bekannten Katalysatorkomplex handelt es sich üblicherweise um eine Kombination aus einem Amin, z.B. n-Dibutylamin, Diethylamin, Picolin, Chinolin, Pyridinbasen, Triisopropylamin, Dimethylisopropanolamin, Triethanolamin, Triisopropanolamin oder Diisopropanolamin mit einem Kupfersalz wie Kupfer-I-Bromid, Kupfer-I-Chlorid, Kupfer-I-Jodid, Kupfer-II-Acetat, Kupfer-II-Propionat, Kupfer-II-Acetessigester oder Kupfer-II-Acetylacetonat. Ein bevorzugter Bereich bei der Menge der eingesetzten Amine liegt bei 2,0 bis 25,0 Mol pro 100 Mol des Monomeren, die Konzentration der Amine kann aber in der Reaktionsmischung innerhalb weiter Grenzen variieren, zweckmässig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1:1 bis 20:1, d.h. maximal bis zu einem Überschuss des 20fachen am Lösungsmittel, bezogen auf das Monomere.

Als Lösungsmittel werden Benzol, Toluol, Ethylbenzol, Cumol, Xylol, Methylethylbenzol und andere alkylierte aromatische Kohlenwasserstoffe mit bis zu 12 C-Atomen sowie aliphatische Kohlenwasserstoffe, vorzugsweise $C_6$- bis $C_{10}$-Kohlenwasserstoffe, halogenierte aromatische Kohlenwasserstoffe, wie Chlorbenzol, Dichlorbenzol u.a., Arylalkylether, wie Anisol, p-Methylanisol, Ethylphenylether u.a. sowie aromatische Carbonsäureester, wie Benzoesäuremethylester u.a. eingesetzt. Bevorzugt verwendet werden Toluol, Ethylbenzol, Anisol.

Die in dem erfindungsgemässen Verfahren eingesetzten Lösungen der Polyphenylenether enthalten nur noch geringe Restmengen des bei der oxidativen Selbstkondensation des Ausgangsphenols eingesetzten Katalysatorkomplexes. Die Entfernung der Katalysatorreste wird nach den in der Literatur bekannten Verfahren vorgenommen (US-PSen 3 984 374, 3 988 298, 4 026 870, 4 024 107, 4 150 218). Der Rest-Katalysatormetallatomgehalt, i.a. handelt es sich um den Rest-Kupfer-Gehalt, wird unter 10 ppm, vorzugsweise $<8$ ppm abgesenkt. Höhere Rest-Katalysatorgehalte führen zu einer stark verminderten Thermostabilität der resultierenden Formmassen.

Das im Katalysatorkomplex enthaltene Amin wird i.a. bei der Abtrennung der Katalysatormetallkomponente nicht aus dem Reaktionssystem entfernt und ist in der im erfindungsgemässen Verfahren eingesetzten organischen Lösung der Polyphenylenether in den oben angebebenen Mengen enthalten. Bei dem Verdampfen der Lösungsmittelanteile in dem erfindungsgemässen Mehrstufenprozess wird das Amin mitentfernt. Es ist also kein zusätzlicher Verfahrensschritt zur Abtrennung der Aminkomponente des Katalysatorkomplexes, wie etwa eine Säurewäsche, notwendig.

Unter anderen Polymeren werden Homo- und Copolymere des Styrols und/oder seiner Homologen verstanden, die vorzugsweise mit Kautschuk modifiziert sein können. In den Copolymeren verwendet man im allgemeinen Acrylsäure oder Methacrylsäure oder ihre Derivate wie (Meth-)acrylsäureester, (Meth-)acrylamide oder (Meth-)acrylnitril, auch Maleinsäureanhydrid und die Ester der Maleinsäure, der Fumarsäure oder Itaconsäure sind einsetzbar. Unter Homologen des Styrols versteht man im engeren Sinn die im Kern oder der Seiten-Kette alkylierten Substitutionsprodukte, besonders p-Methylstyrol, m-Methylstyrol, o-Methylstyrol und ihre Mischungen, $\alpha$-Methylstyrol, mehrfach alkylierte Styrole wie 2,4-Dimethylstyrol und Styrole mit höheren Alkylsubstituenten, wie tert.-Butylstyrol oder Vinyltetralin, und solche mit Arylsubstituenten wie Phenylstyrol oder Vinylnaphthalin. Aber auch andere Substitutionsprodukte des Styrols sind im weiteren Sinn als Homologe des Styrols zu betrachten, wie die im Kern halogenierten, acylierten oder andersseitig substituierten Styrole. Diese Homologen können auch als Comonomere des Styrols verwendet werden.

Zur Schlagfestmodifizierung werden in bekannter Weise Polybutadien, SBR-Kautschuk, Polyisopren, Polyacrylate, Ethylen-Vinylacetat-Copolymere, Polyisobutylen oder EPDM eingesetzt.

Das erfindungsgemässe Verfahren geht von Lösungen der Polyphenylenether (PPE) in einem der geeigneten Lösungsmittel aus. Die Lösung stammt in der Regel aus dem Herstellprozess des

PPE; in diesem Fall muss sie in hier nicht beanspruchter Weise von Kupfer-, Mangan- oder anderen Schwermetallkatalysatoren der oxidativen Kupplung befreit sein. Es ist jedoch nicht erforderlich, von Schwermetallsalz-freier Reaktionslösung auszugehen; es ist auch möglich, festen PPE oder seine Mischungen mit Styrolpolymerisaten im Lösungsmittel zu lösen, in Lösung mit Styrolpolymerisaten zu versetzen und diese Lösungen gemeinsam aufzuarbeiten. Ein derartiges Vorgehen kann nützlich sein, wenn die Herstellung des PPE und seine Compoundierung mit Styrolpolymeren räumlich sehr weit getrennt liegen.

Die Apparatur besteht aus einer Kaskade von hintereinander geschalteten Verdampfungsbehältern:

1. Vorkonzentrierung
2. Nachkonzentrierung
3. Vakuum-Verdampfung
4. Fein-Vakuum-Verdampfung

Das erfindungsgemässe Verfahren arbeitet kontinuierlich in mehreren Stufen. In einer ersten Stufe wird die Eingangslösung in einem Wärmetauscher auf 190 bis 250°C aufgeheizt; sie wird anschliessend in die Vorkonzentrierungsstufe bei Drucken zwischen 0,5 und 2,5 bar und 100 bis 160°C entspannt. Dabei wird die Eingangslösung von 10 bis 20% Feststoffgehalt auf 15 bis 60% Feststoff aufkonzentriert. Die konzentrierte Lösung wird kontinuierlich entnommen und in einem dynamisch oder statisch arbeitenden Mischorgan mit der gewünschten Menge des Styrolpolymeren kontinuierlich versetzt. Letzteres kann als Lösung im gleichen Lösungsmittel wie PPE oder – vorzugsweise – als Schmelze eingebracht werden. Die Lösung oder Schmelze kann nichtflüchtige Hilfsstoffe wie Flammschutzmittel, Stabilisatoren, Formtrennmittel, Antistatika usw. enthalten, die auf diesem Wege schonend in den Gesamtcompound eingebracht werden können.

Hat die Lösung der Polymermischungen nach der Vereinigung einen Feststoffgehalt über 50%, kann sie im allgemeinen direkt der übernächsten Stufe, der Vakuumverdampfung, zugeführt werden. Im anderen Fall wird sie über einen Wärmetauscher der Nachkonzentrierung (2. Stufe) zugeführt. Die Temperatur wird dabei von 100 bis 160°C auf 120 bis 200°C erhöht; die Konzentration der Feststoffe erhöht sich bei Drucken zwischen 0,2 und 1,5 bar von 33 bis 50% auf 50 bis 70%. Die der Nachkonzentrierung entnommene Lösung wird über einen weiteren Wärmetauscher in die Vakuumverdampfung (Stufe 3) eingespeist. Sie wird hierzu auf Temperaturen zwischen 220 und 280°C aufgeheizt; bei Drucken zwischen 10 und 50 mbar wird der grösste Teil des restlichen Lösungsmittels abgezogen. Reste unter 2% werden in einer nachfolgenden Fein-Vakuum-Verdampfung (Stufe 4) bei 220 bis 280°C und Drucken von 1 bis 5 mbar entfernt. Man kann den Austrag aus Stufe 3 mit einem Wärmetauscher weiter aufheizen und auch zusätzlich kleine Mengen von Verdampfungshilfen wie Wasser oder Methanol, flüssig oder dampfförmig, eindosieren; im Regelfall sind beide Massnahmen entbehrlich. Aus Stufe 4 wird das Erzeugnis wiederum kontinuierlich entnommen, in Strängen ausgetragen, im Wasserbad abgekühlt und granuliert. Bei allen Prozentangaben handelt es sich um Gewichtsprozente.

Die flüchtigen Anteile aller Stufen werden getrennt kondensiert und gemeinsam aufgefangen; die gesammelten Kondensate werden über eine gemeinsame Leitung einer Destilliereinrichtung zugeführt, in der schwerflüchtige Verunreinigungen und ggf. die Verdampfungshilfen abgetrennt werden. Etwa vorhandene Amine werden im Lösungsmittel belassen und mit ihm gemeinsam rückgeführt.

Das erfindungsgemässe Verfahren erlaubt es, unter schonenden Bedingungen Polymermischungen aus Polyphenylenethern und Styrolpolymeren herzustellen. Die bei den bisherigen Verfahren auftretende z.T. starke Produktschädigung bei der Herstellung dieser Polymermischungen wird wesentlich vermindert bzw. völlig unterdrückt. Die resultierenden Polymermischungen besitzen dementsprechend eine erhöhte Wärmeformbeständigkeit, geringere Eigenfarbe und ein höheres Zähigkeitsniveau. Das gilt insbesondere für Polymermischungen auf Basis schlagzäh modifizierter Styrolpolymerisate und Polyphenylenether. Ein zusätzlicher Vorteil des erfindungsgemässen Verfahrens ist die problemlose Einarbeitung löslicher Hilfsstoffe, wie Flammschutzmittel, Stabilisatoren und Formtrenn- bzw. Gleitmittel in die Polymermischungen, indem diese Hilfsstoffe der Ausgangspolymerlösung zugesetzt und über den Mehrstufenprozess der Lösungsmittelverdampfung mitgeführt werden. Der sonst übliche zusätzliche Konfektionierschritt zur Einarbeitung dieser Hilfsmittel in die Polymerblends kann dann entfallen.

Das erfindungsgemässe Verfahren wird an dem folgenden Beispiel erläutert. Zur Prüfung der Produkte wurden folgende Produktkenndaten ermittelt: Die Kerbschlagzähigkeit der Produkte wurde nach DIN 53 453 an bei 280°C gespritzten Normkleinstäben bei einer Prüftemperatur von 23°C gemessen. Die Wärmeformbeständigkeit wurde anhand des Vicat-Erweichungspunktes in °C nach DIN 53 460, Verfahren B, in Silikonöl bestimmt.

Die Eigenfarbe der resultierenden Formmassen wurde visuell anhand unterschiedlich konzentrierter, frisch hergestellter wässriger Jod/Jodkaliumlösungen beurteilt. Die Massangabe erfolgt in mg Jod in 100 ml wässriger Jodkaliumlösung analog DIN 53 403. Bei allen Prozentangaben handelt es sich um Gewichtsprozente.

Beispiel

Eine Lösung von 10 Teilen Poly-(2,6-dimethylphenylenoxid-1,4) (PPO), Grenzviskosität $[\eta]$ = 0,60 dl/g (Chloroform, 25°C) in 90 Teilen Ethylbenzol und 1 Teil Di-n-butylamin wird kontinuierlich aus einem Tank mit 50 kg/h über einen Röhrenbündelwärmetauscher auf 230°C aufgeheizt und in einem 250-l-Kessel bei Normaldruck auf 140°C entspannt. Dabei werden 25 kg/h flüchtige Anteile abgezogen; es verbleiben 5 kg Feststoff in 20,5 kg flüchtigen Anteilen (19,6%). Dieser Lösung werden 15 kg/h schlagfestes Polystyrol mit einem Polybutadiengehalt von 8% und einer Grenzviskosität der Matrix [η] = 0,65 dl/g (Toluol, 25°C) als Schmelze von 220°C in einem statischen Mischer zugeführt (49,4% Feststoffe). Die Lösung heizt sich auf 170°C auf und wird ohne weitere Erwärmung einem 250-l-Behälter zugeführt. Hier destillieren bei 1 bar und 140°C 5 kg/h flüchtige Anteile ab. Die verbleibende Lösung aus 5 kg PPO, 15 kg schlagfestem Polystyrol und 15,5 kg flüchtigen Bestandteilen (56,3% Feststoff) wird kontinuierlich ausgetragen, mit einem Röhrenbündelwärmetauscher auf 250°C aufgeheizt und in eine aussen auf 250°C beheizte Vakuumkammer von 400 l Inhalt und 30 mbar entspannt. Die ausgetragene Schmelze enthält noch 1,35% flüchtige Anteile. Sie wird in eine zweite aussen auf 250°C beheizte Vakuumkammer von 100 l Inhalt ohne weitere Heizung eingetragen; hier werden bei einem Druck von 1,5 mbar die letzten flüchtigen Anteile entfernt. Die Schmelze wird mit 20 kg/h ausgetragen, sie enthält nach gaschromatographischer Bestimmung zwischen 150 und 300 ppm restliches Ethylbenzol. Sie besteht aus einer Mischung von 75% schlagfestem Polystyrol und 25% PPO.

Vergleichsbeispiel

Zum Vergleich wird die gleiche Mischung aus 25% PPO, gewonnen aus der Ausgangslösung durch Fällen mit der 10fachen Menge Methanol, und 75% schlagfestem Polystyrol bei 310°C auf einer ZDSK 53 der Firma Werner & Pfleiderer konfektioniert. Beide Produkte wurden normalen Tests unterworfen. Das Ergebnis zeigt die Tabelle.

Tabelle

| Beispiel | Verhältnis PPO/HIPS | Wärmeformbeständigkeit nach VICAT [°C] | Kerbschlagzähigkeit $a_K$ [kJ/m²] bei 23°C | mg Jod in 100 ml wässriger Jodkaliumlösung |
|---|---|---|---|---|
| | 25/75 | 115 | 13,7 | 60 |
| Vergleichsbeispiel (nicht erfindungsgemäss) | 25/25 | 113 | 8,8 | 130 |

**Patentansprüche**

1. Verfahren zur Herstellung von hochmolekularen Polyphenylenether enthaltenden Formmassen, wobei Eingangslösungen von 10 bis 20 Gew.% Polyphenylenether in organischen Lösungsmitteln gemeinsam mit Homo- oder Copolymerisaten des Styrols oder seiner Homologen, die gegebenenfalls mit Kautschuk modifiziert sind, durch Verdampfen des Lösungsmittels von diesem befreit werden, dadurch gekennzeichnet, dass man in einem Mehrstufenprozess

1) die Eingangslösung auf 15 bis 60 Gew.% aufkonzentriert, indem man zunächst auf 190 bis 250°C aufheizt und anschliessend bei 0,5 bis 2,5 bar und 100 bis 160°C entspannt,
2) die konzentrierte Lösung kontinuierlich mit dem Styrolpolymeren – in Form einer Lösung oder Schmelze – versetzt,
3) die Lösung der Polymermischung nach einer gegebenenfalls notwendigen Nachkonzentrierung auf einen Feststoffgehalt über 50 Gew.% einer Vakuumverdampfung bei 10 bis 50 mbar und 220 bis 280°C zuführt,
4) die Lösungsmittelreste durch eine Feinvakuumverdampfung bei 1 bis 5 mbar und 220 bis 280 °C entfernt und
5) anschliessend das Erzeugnis in Strängen austrägt.

2. Verfahren nach Anspruch 1, dadurch gekennzeichnet, dass die gegebenenfalls notwendige Nachkonzentrierung bei 0,2 bis 1,5 bar und 120 bis 200°C auf eine Konzentration von 50 bis 70 Gew.% Feststoff vorgenommen wird.

3. Verfahren nach Anspruch 1, dadurch gekennzeichnet, dass das Verdampfen in Gegenwart von Partialdruck senkenden Hilfsmitteln wie Wasser und/oder Methanol vorgenommen wird.

4. Verfahren nach Anspruch 1, dadurch gekennzeichnet, dass das Styrolpolymerisat nichtflüchtige Hilfsstoffe wie Flammschutzmittel, Stabilisatoren, Formtrennmittel oder Antistatika enthält.

**Claims**

1. A process for the production of a molding material containing a high molecular weight polyphenylene ether, a starting solution of 10 to 20% by weight of the polyphenylene ether in an organic solvent, together with a homopolymer or copolymer of styrene or of a homolog thereof, which may be modified with rubber, being freed from solvent by evaporation thereof, wherein, in a multi-stage process,

1) the starting solution is concentrated to 15 to 60% by weight by first heating it to 190 to 250°C and then effecting flashing to 0.5 to 2.5 bars at 100 to 160°C,
2) the styrene polymer in the form of a solution or melt is added continuously to the concentrated solution,
3) the solution of the polymer blend, after a post-concentration step which may be necessary to

increase the solids content to more than 50% by weight, is subjected to evaporation under reduced pressure of from 10 to 50 millibars at 220 to 280°C,

4) the solvent residues are removed by evaporation under greatly reduced pressure of from 1 to 5 millibars at 220 to 280°C, and

5) the product is then discharged in the form of strands.

2. A process as claimed in claim 1, wherein the post-concentration step which may be necessary is carried out under a pressure of from 0.2 to 1.5 bars at 120 to 200°C to bring the solids content to 50 to 70% by weight.

3. A process as claimed in claim 1, wherein evaporation is carried out in the presence of an assistant which reduces the partial pressure, such as water and/or methanol.

4. A process as claimed in claim 1, wherein the styrene polymer contains non-volatile assistants such as flame-proofing agents, stabilizers, mold release agents and antistatic agents.

**Revendications**

1. Procédé de préparation de matières à mouler contenant des poly(éthers de phénylène) à haut poids moléculaire, dans lequel on élimine conjointement de solutions de départ, contenant entre 10 et 20% en poids de poly(éthers de phénylène) dans des solvants organiques et d'homo- ou de copolymères du styrène ou des homologues de celui-ci, éventuellement modifiés par un caoutchouc, le solvant par évaporation, caractérisé en ce que, dans un processus à plusieurs stades:

1) on concentre la solution de départ jusqu'à 15 à 60% en poids par un chauffage entre 190 et 250°C, suivi d'une détente entre 0,5 et 2,5 bars et entre 100 et 160°C,

2) on mélange en continu, à la solution concentrée, le polymère styrénique en solution ou à l'état fondu,

3) on soumet la solution du mélange de polymères éventuellement à une post-concentration pour l'obtention d'une teneur en matières solides supérieure à 50% en poids, puis à une évaporation sous vide entre 220 et 280°C et 10 à 50 millibars,

4) on élimine le solvant résiduel par une évaporation sous vide poussée entre 220 et 280°C et 1 à 5 millibars et

5) on extrude le produit sous forme de boudins.

2. Procédé suivant la revendication 1, caractérisé en ce que la post-concentration éventuelle est réalisée entre 120 et 200°C et 0,2 à 1,5 bar jusqu'à une teneur en matières solides de 50 à 70% en poids.

3. Procédé suivant la revendication 1, caractérisé en ce que l'évaporation est réalisée en présence d'additifs abaissant la tension partielle tels que l'eau et (ou) l'alcool méthylique.

4. Procédé siuvant la revendication 1, caractérisé en ce qu'au polymère styrénique sont incorporés des additifs non volatils tels que des composés ignifugeants, des stabilisants, des adjuvants de démoulage ou des agents antistatiques.